# EUROPÄISCHE PATENTSCHRIFT

(11) **EP 3 091 725 B1**
(45) Veröffentlichungstag und Bekanntmachung des Hinweises auf die Patenterteilung: **29.08.2018**
(21) Anmeldenummer: 15001360.5
(22) Anmeldetag: 07.05.2015
(51) Int. Cl.: H04N 1/00, G03B 17/53, H04N 5/232, H04N 21/4223, H04N 21/475, G06F 21/31, H04N 21/61, H04N 21/44

(54) **VERFAHREN ZUM ZUGRIFF EINES NUTZERS AUF DIE VISUELLEN AUFNAHMEN EINER ÖFFENTLICHEN KAMERA**
METHOD FOR ALLOWING A USER ACCESS TO THE VISUAL RECORDINGS OF A PUBLIC CAMERA
PROCÉDÉ D'ACCÈS D'UN UTILISATEUR AUX ENREGISTREMENTS VISUELS D'UNE CAMÉRA PUBLIQUE

(43) Veröffentlichungstag der Anmeldung: 09.11.2016
(73) Patentinhaber: Deutsche Telekom AG, 53113 Bonn (DE)
(72) Erfinder: Beer, Andreas, 85630 Grasbrunn (DE); Windheuser, Jörg, 40627 Düsseldorf (DE); Schmidt-Gabriel, Michael, 82234 Wessling (DE); Heinz, Sebastian, 53227 Bonn (DE)
(74) Vertreter: Cohausz Hannig Borkowski Wißgott

(56) Entgegenhaltungen:
- US-A1- 2010 214 398
- US-A1- 2013 156 274
- US-A1- 2013 188 063
- US-A1- 2013 307 998
- US-A1- 2015 103 188

## Beschreibung

Die Erfindung betrifft ein Verfahren zum Zugriff eines Nutzers auf die visuellen Aufnahmen einer öffentlichen Kamera, welche am Ort ihrer öffentlichen Benutzung wenigstens eine visuelle Aufnahme, insbesondere wenigstens ein Foto oder wenigstens ein Video erstellt, bevorzugt in welcher der Nutzer, insbesondere das Gesicht des Nutzers abgebildet ist, wobei die öffentliche Kamera mittels einer Kommunikationseinheit die wenigstens eine visuelle Aufnahme an eine öffentlich zugängliche Datenbank übersendet und die wenigstens eine visuelle Aufnahme in der Datenbank gespeichert wird zum Abruf durch den Nutzer, insbesondere abgebildeten Nutzer mittels eines Authentifizierungscodes, wofür der Authentifizierungscode durch Telekommunikation, insbesondere durch den Nutzer oder durch ein von ihm genutztes Kommunikationsgerät , an die Datenbank übertragen wird.

Ein solches Verfahren ist im Stand der Technik bekannt, beispielsweise aus der Publikation US 8,264,529 B2.

Diese Publikation offenbart ein Verfahren und ein System, bei dem eine öffentliche Kamera auf einem Halter, z.B. in der Nähe von Sehenswürdigkeiten angeordnet ist und die Möglichkeit bietet, dass jeder interessierte Nutzer sich mittels dieser öffentlichen Kamera fotografieren lässt, wonach der Nutzer eine aufgenommene visuelle Aufnahme sodann an sein mobiles Kommunikationsgerät übertragen bekommt oder Zugang erhält zu der wenigstens einen visuellen Aufnahme, die in einer Datenbank hierfür gespeichert wird.

Dafür bezeichnet es die Publikation als notwendig, dass der Nutzer sich als berechtigt mit einem Authentifizierungscode ausweist, wofür gemäß der genannten Publikation eine Identifikation desjenigen mobilen Kommunikationsgerätes genutzt wird, mit welchem der Nutzer die Kamera bedient, insbesondere getriggert hat, um die wenigstens eine visuelle Aufnahme zu erstellen.

Die Publikation erwähnt es hierbei, dass der Nutzer über sein mobiles Kommunikationsgerät, wie beispielsweise ein Mobiltelefon nicht nur die Triggerung sondern auch Einstellungen an der öffentlichen Kamera vornehmen kann, wie die Wahl des Bildausschnittes, Neigung der Kamera, Brennweiteneinstellungen bei einem Zoomobjektiv oder Fokuslage.

Weitere Verfahren zum Abruf von mit öffentlichen Kameras erstellten Bildern werden in den Dokumenten US2013/307998 A1 und US2015/103188 A1 offenbart.

Als nachteilig wird es bei den vorbeschrieben Verfahren angesehen, dass ein Nutzer sich den speziellen Authentifizierungscode merken muss oder aber zum Abruf der visuellen Aufnahme aus der Datenbank dasjenige Kommunikationsgerät nutzen muss, mit welchem auch die Bedienung bzw. Auslösung der öffentlichen Kamera erfolgte.

Vor diesem Hintergrund ist es eine Aufgabe der Erfindung, einen Zugriff auf diejenigen visuellen Aufnahmen in der Datenbank einfacher zu gestalten, welche dem entsprechenden Nutzer zugeordnet sind. Dabei kann es sich bevorzugt um Aufnahmen handeln, welche den Nutzer in den Aufnahmen zeigen, dies ist jedoch nicht zwingend nötig.

Diese Aufgabe wird erfindungsgemäß dadurch gelöst, dass der Authentifizierungscode gebildet wird durch eine visuelle Authentifizierungsaufnahme oder gebildet wird in Abhängigkeit von einer visuellen Authentifizierungsaufnahme, bevorzugt einer solchen in welcher der Nutzer, insbesondere das Gesicht des Nutzers abgebildet ist. Insbesondere in Bezug auf eine später zu beschreibende Ausführung ergibt sich, dass der Nutzer in der Authentifizierungsaufnahme nicht zwingend selbst gezeigt sein muss, wenngleich dies als vorteilhaft angesehen wird.

Eine Authentifizierungsaufnahme ist somit genauso wie die visuelle Aufnahme ein Foto oder ein Video, bevorzugt eines, in welchem der Nutzer dargestellt ist.

Der wesentliche Kerngedanke der Erfindung ist es demnach, dass ein Nutzer Zugriff auf die ihm zugeordneten visuellen Aufnahmen durch eine visuelle Aufnahme, z.B. eine seiner selbst erhalten kann. Dabei kann es die Erfindung vorsehen, dass diese Authentifizierungsaufnahme durch dieselbe öffentliche Kamera erstellt wird, oder aber auch vom Nutzer selbst, z.B. mit seiner eigenen Kamera.

Im Sinne der Erfindung wird die öffentliche Kamera insofern als öffentlich verstanden, dass jeder interessierte Nutzer die Kamera nutzen kann, oder zumindest könnte. Dabei schließt der Begriff der Öffentlichkeit nicht aus, dass es sich ggfs. nur um Nutzer einer beschränkten Gruppe von Personen handelt, wie z.B. solche Personen, die in der Nähe oder bei einer Sehenswürdigkeit sind, oder die Personen, die an einem Ereignis / Event teilnehmen, z.B. einem Konzert oder sich in einem Stadion befinden. Gleiches gilt für die öffentliche Datenbank. Es kann auch vorgesehen sein, dass die öffentliche Kamera wenigstens eine visuelle Aufnahme aus allen erstellten visuellen Aufnahmen (ggfs. auch nur eine), bevorzugt in denen der Nutzer abgebildet ist, zumindest ausschnittsweise auch an das Kommunikationsgerät des Nutzers übersendet und diese übersendete Aufnahme als Authentifizierungsaufnahme genutzt werden kann.

Beispielsweise kann es für diese, aber auch für die später beschriebenen Ausführungen, somit also allgemein vorgesehen sein, dass ein Nutzer mit seinem, bevorzugt mobilen Kommunikationsgerät, wie z.B. einem Mobiltelefon eine Triggerung der öffentlichen Kamera durchführt, um diese zur Aufnahme einer oder auch mehrerer visuellen Aufnahmen auszulösen.

Hierfür kann es vorgesehen sein, dass der Nutzer mit seinem mobilen Kommunikationsgerät eine Kommunikationsverbindung zu der öffentlichen Kamera aufbaut, wie es grundsätzlich im Stand der Technik, beispielsweise aus der vorgenannten Publikation bekannt ist.

Eine solche Kontaktaufnahme kann beispielsweise durch eine Nahfeldkommunikation zwischen öffentlicher Kamera und mobilem Kommunikationsgerät gegeben sein, aber auch über Mobilfunk (GSM), so dass Daten zwischen Kamera und mobilem Kommunikationsgerät bevorzugt bidirektional ausgetauscht werden können.

Beispielsweise kann hierdurch der Nutzer mittels eines mobilen Kommunikationsgerätes Einstellungen wie Blickwinkel, Brennweite, Fokuslage oder sonstige für die Aufnahme nötige Einstellungen an der öffentlichen Kamera bewirken.

Bei dieser Ausführungsform sowie auch generell für alle Ausführungen der weiterhin beschriebenen Erfindung kann die Kontaktaufnahme zwischen mobilem Kommunikationsgerät und einer Kamera dadurch erfolgen, dass ein Code, z.B. ein QR-Code an der öffentlichen Kamera mit dem Kommunikationsgerät (z.B. Mobiltelefon) abfotografiert wird, wonach unmittelbar die Kommunikationsverbindung zwischen mobilem Kommunikationsgerät und der Kamera erstellt wird.

Auch kann die Möglichkeit bestehen, dass durch die öffentliche Kamera ein Nahfeldkommunikationsnetzwerk eröffnet wird bzw. ist, z.B. als Wireless Lan oder als Bluetooth Netzwerk, in welches sich das mobile Kommunikationsgerät des Nutzers einwählen kann.

Wie eingangs beschrieben wird so im Rahmen der Kommunikation zwischen dem Kommunikationsgerät (z.B. Mobiltelefon) des Nutzers und der öffentlichen Kamera z.B. nach deren Triggerung wenigstens eine visuelle Aufnahme erstellt, die in die Datenbank übertragen wird.

Dabei kann es vorgesehen sein, dass die Übertragung oder aber auch erst ein späterer Abruf aus der Datenbank in Abhängigkeit einer bezahlten Gebühr erfolgt. Für die zumindest ausschnittsweise Übersendung wenigstens einer aus allen erstellten visuellen Aufnahmen kann man weiterhin vorsehen, dass diese als nutzbare Authentifizierungsaufnahme an das Kommunikationsgerät des Nutzers übersendete visuelle Aufnahme eine geringe Bildauflösung aufweist als die wenigstens eine an die Datenbank übertragene visuelle Aufnahme.

So kann ein Nutzer hierdurch zwar beispielsweise eine Bildkontrolle vornehmen, der Nutzer wird sich jedoch im Regelfall nicht mit dieser Aufnahme als Erinnerung zufrieden geben und somit bei entsprechendem Gefallen an der Aufnahme auf die in der Datenbank gespeicherte wenigstens eine visuelle Aufnahme in besserer Qualität zurückgreifen wollen, was durch die an das mobile Kommunikationsgerät des Nutzers übertragene Authentifizierungsaufnahme möglich ist.

Die an das Kommunikationsgerät übertragene Authentifizierungsaufnahme kann z.B. durch ein Standbild eines Live-Videostreams gegeben sein, der zum Zweck der Bildeinstellung von der öffentlichen Kamera an das Kommunikationsgerät des Nutzers im Rahmen der Kommunikation gesendet wird. Das Standbild kann z.B. in dem Augenblick erstellt werden, wenn der Nutzer bei Zufriedenheit mit dem Live-Video-Stream die öffentliche Kamera zur Aufnahme triggert, z.B. durch Betätigen einer Auslösetaste einer Tastatur oder eines Touch-Bildschirmes des Kommunikationsgerätes.

Der Nutzer kann diese erhaltene Authentifizierungsaufnahme zu jedem späteren Zeitpunkt an die Datenbank zum Zweck der Authentifizierung übersenden, wonach sodann dem Nutzer aus der Datenbank die wenigstens eine, bevorzugt mehrere visuellen Aufnahmen zur Verfügung gestellt werden, insbesondere die ihm zugeordnet sind, bevorzugt die ihn in den Aufnahmen zeigen. Die Datenbank kann dafür allgemein über ein Telekommunikationsnetzwerk, wie das Internet zugänglich sein.

Die Erfindung kann es vorsehen, dass die in die Datenbank übertragene wenigstens eine visuelle Aufnahme verknüpft bzw. zugeordnet wird zu der Authentifizierungsaufnahme. Es kann auch vorgesehen werden, dass in die Authentifizierungsaufnahme die von der Kamera an das bevorzugt mobile Kommunikationsgerät des Nutzers übertragen wird, durch eine Elektronik in der öffentlichen Kamera ein Bildzusatz hinzugefügt wird.

Bei einem solchen Bildzusatz kann es sich beispielsweise um einen Text oder eine sonstige Bildüberlagerung oder auch ein digitales Wasserzeichen handeln.

Hierdurch kann weiterhin bewirkt werden, dass der Nutzer, der die Authentifizierungsaufnahme an sein bevorzugt mobiles Kommunikationsgerät erhalten hat, nicht die Authentifizierungsaufnahme selbst als Erinnerungsaufnahme verwendet, sondern nur zum Zweck der Authentifizierung, um die qualitativ hochwertigeren visuellen Aufnahmen aus der Datenbank abzurufen, insbesondere nach Bezahlung dafür.

Ein solcher Datenbankabruf kann beispielsweise erfolgen durch Einwahl des Nutzers auf einer bestimmten Webseite, über welcher Zugang zu der Datenbank geschaffen wird, wobei diese Webseite eine Upload Funktion bereitstellen kann, um die Authentifizierungsaufnahme an die Datenbank zu übermitteln.

Der Nutzer ist somit auch in die Lage versetzt, mittels der Authentifizierungsaufnahme von jeglichem Kommunikationsgerät aus einen Abruf der ihm zugeordneten wenigstens einen Aufnahme aus der Datenbank zu bewirken, beispielsweise nachdem er die Authentifizierungsaufnahme, die er auf sein bevorzugt mobiles Kommunikationsgerät erhalten hat, an eventuelle andere ebenfalls zur Verfügung stehende Kommunikationsgeräte weitergeleitet hat.

Da die Erfindung vorsieht, dass die öffentliche Kamera zur öffentlichen Benutzung bereitsteht, ist davon auszugehen, dass ggf. eine Vielzahl interessierter Benutzer die Kamera ggf. gleichzeitig nutzen wollen.

Hierfür kann es die Erfindung vorsehen, dass die öffentliche Kamera an den Nutzer durch Telekommunikation einer Nachricht an dessen Kommunikationsgerät, insbesondere durch drahtlose Kommunikation einen Zeitschlitz mitteilt, in welchem die wenigstens eine visuelle Aufnahme durch die Kamera erfolgt oder zumindest auslösbar ist. Dies kann erfolgen, nachdem eine Kontaktaufnahme z.B. durch Kommunikation, z.B. Nahfeldkommunikation zwischen Kamera und Kommunikationsgerät des Nutzers stattgefunden hat.

So kann hier die Erfindung beispielsweise vorsehen, dass das Erstellen von wenigstens einer Aufnahme innerhalb des Zeitschlitzes automatisch erfolgt, wobei der Zeitschlitz z.B. durch einen Countdown auf dem mobilen Kommunikationsgerät des Nutzers angekündigt werden kann.

Ebenso besteht die Möglichkeit, dass die öffentliche Kamera nur innerhalb des genannten Zeitschlitzes durch den Benutzer mittels seines eigenen Kommunikationsgerätes bedienbar ist, hiernach die Bedienung automatisch gesperrt wird und die Kamera wiederum anderen Nutzern zur Verfügung steht, so dass ein interessierter Nutzer angehalten ist, eine Triggerung der öffentlichen Kamera innerhalb des Zeitschlitzes vorzunehmen. Beispielsweise kann es hier vorsehen sein, einen Zeitschlitz in der zeitlichen Breite von 1 bis 5 Minuten vorzusehen.

Neben der Möglichkeit, dass eine Authentifizierungsaufnahme genutzt wird, um die wenigstens eine visuelle Aufnahme der öffentlichen Kamera, insbesondere die den Nutzer zeigt bzw. den Nutzer darin abbildet, zu der Authentifizierungsaufnahme zuzuordnen und nach der Zuordnung die wenigstens eine visuelle Aufnahme an die Datenbank zu übertragen kann die Erfindung auch alternativ vorsehen, dass die wenigstens eine visuelle Aufnahme von der öffentlichen Kamera ohne eine vorherige Zuordnung zu der Authentifizierungsaufnahme an die Datenbank übertragen wird und der Nutzer dadurch Zugang zu der oder denjenigen in diesem Fall bevorzugt auch den Nutzer zeigenden visuellen Aufnahmen erhält, dass die Datenbank bzw. eine diese verwaltende Datenverarbeitungsanlage mit Hilfe der Authentifizierungsaufnahme einen Bildvergleich mit den gespeicherten visuellen Aufnahmen der Datenbank vornimmt.

Z.B. kann überprüft werden, ob der Bildinhalt einer Authentifizierungsaufnahme vollständig oder zumindest teilweise in einer gespeicherten visuellen Aufnahme enthalten ist. Die ist besonders dann vorteilhaft, wenn zu jeder visuellen Aufnahme auch eine Authentifizierungsaufnahme erstellt und an den Nutzer übermittelt wird. Die Authentifizierungsaufnahme zeigt dann bevorzugt einen Bildinhalt, der auch vollständig in der gespeicherten visuellen Aufnahme enthalten ist. Der Nutzer kann z.B. ein Foto der Sehenswürdigkeit als Authentifizierungsaufnahme gemacht haben, die auch in der wenigstens eine visuellen Aufnahme enthalten ist.

Der Nutzer kann hier auch ein Foto von sich selbst gemacht haben, z.B. seines Gesichtes, das auch in der wenigstens einen visuellen Aufnahmen der öffentlichen Kamera enthalten ist.

So kann es demnach auch vorgesehen sein den in der Authentifizierungsaufnahme enthaltenen Nutzer, bevorzugt dessen Gesicht, durch Bildvergleich in den visuellen Aufnahmen der Datenbank zu ermitteln und nur diejenige wenigstens einen visuelle Aufnahme aus der Datenbank an den Nutzer zur Verfügung zu stellen, in welchen der Nutzer, insbesondere das Gesicht des Nutzers erkannt wurde.

Bei einer solchen Zurverfügungstellung des Zugriffes auf visuelle Aufnahmen auf der Basis eines durchgeführten Bildvergleiches zwischen den Inhalten der Authentifizierungsaufnahme und den gespeicherten visuellen Aufnahmen, z.B. auf der Basis der darin jeweils enthaltenen Gesichter des Nutzers, kann es die Erfindung auch vorsehen, dass eine visuelle Authentifizierungsaufnahme nicht von der öffentlichen Kamera erstellt und an den Nutzer zur Verfügung gestellt wird, sondern dass der Nutzer selbst eine solche Authentifizierungsaufnahme macht, z.B. seines Gesichtes, insbesondere ein sogenanntes Selfie, erstellt, z.B. mittels einer Kamera, beispielsweise einer Kamera in einem mobilen Kommunikationsgerät und z.B. mit demjenigen Kommunikationsgerät, mit dem auch die öffentliche Kamera bedient wurde.

Statt einer gezielten Auslösung der öffentlichen Kamera zur Erstellung visueller Aufnahmen durch den Nutzer, beispielsweise unter Zuhilfenahme eines Kommunikationsgerätes kann es die Erfindung in einer anderen Ausführung vorsehen, dass die öffentliche Kamera in zeitlichen, insbesondere äquidistanten zeitlichen Abständen automatisch visuelle Aufnahmen von der Umgebung der Kamera erstellt, wobei zumindest in einigen aller visuellen Aufnahmen der Nutzer abgebildet ist, zumindest wenn er sich in der Umgebung der Kamera aufgehalten hat.

So kann es in einem solchen Fall beispielsweise vorgesehen sein, dass in der Umgebung einer Sehenswürdigkeit oder bei einem Event eine öffentliche Kamera stationär oder auch beweglich positioniert wird, die automatisch z.B. im periodischen Takt einer oder weniger Sekunden fortwährend Aufnahmen erstellt.

Ein Nutzer kann sich somit selbst, mit seinem Partner oder mit einer Gruppe von Personen in dem bildlichen Erfassungsbereich einer solchen positionierten öffentlichen Kamera begeben und kann sich hiernach sicher sein, dass die öffentliche Kamera wenigstens eine visuelle Aufnahme bevorzugt mehrere erstellt hat, in denen der Nutzer auch abgebildet ist, zumindest wenn sich der Nutzer im Erfassungsbereich der Kamera länger aufgehalten hat als der zeitliche Abstand zwischen zwei erstellten visuellen Aufnahmen.

Auf diese von der Kamera an die Datenbank übertragenen Aufnahmen kann der Nutzer somit beispielsweise durch eine Authentifizierungsaufnahme Zugriff erhalten, die er von sich selbst mit einer anderen Kamera gemacht hat, so dass die Datenbank bzw. eine diese verwaltende Datenverarbeitungsanlage in der Lage versetzt ist durch Bildvergleich, insbesondere Gesichtervergleich, aus allen gespeicherten visuellen Aufnahmen diejenigen heraus zu suchen, in denen der Nutzer abgebildet ist.

Hier kann es die Erfindung vorsehen zwecks Reduzierung derjenigen gespeicherten visuellen Aufnahmen, mit denen ein Vergleich vorgenommen werden muss, dass der Nutzer eine Zeitangabe (z.B. Datum und/oder Uhrzeit, ggfs. als Intervall) an die Datenbank zusätzlich zur Verfügung stellt und aus den gespeicherten visuellen Aufnahmen in der Datenbank somit nur solche zu einem Vergleich herangezogen werden, die in einer zeitlichen Umgebung um den vom Nutzer angegebenen Zeitpunkt oder Zeitintervall gemacht wurden.

Weiß der Nutzer somit beispielsweise, dass an einem bestimmten Datum zu einer bestimmten Uhrzeit er sich in der Nähe einer öffentlichen Kamera z.B. bei einer Sehenswürdigkeit oder auch bei einer sonstigen öffentlichen Veranstaltung befunden hat, so kann er allein über die Angabe der Zeitinformation und der Zurverfügungstellung einer Authentifizierungsaufnahme, die den Nutzer selbst, insbesondere sein Gesicht in der Aufnahme zeigt, Zugriff auf die Bilder erhalten.

Besonders die vorgenannte Ausführung, bei der mit einer öffentlichen Kamera in zeitlichen, insbesondere äquidistanten zeitlichen Abständen visuelle Aufnahmen von der Umgebung der Kamera erstellt werden, erschließen sich auch Anwendungen, die über die reine feste Positionierung einer öffentlichen Kamera z.B. bei Sehenswürdigkeiten hinausgehen.

Zum Beispiel können mit einer öffentlichen Kamera auch beliebige Ereignisse fotografisch oder videografisch erfasst werden, wie z.B. Konzerte, Fußballspiele oder jegliche Events anderer Art.

Beispielsweise können hier auch öffentliche Kameras zum Einsatz kommen, die nicht örtlich stationär angeordnet sind, sondern sich in ihrer Position bewegen, z.B. solche Kameras, die bei Events über eine Zuschauermenge hinweg bewegt werden. Personen die von der öffentlichen Kamera in der Menge erfasst werden können durch eine Authentifizierungsaufnahme, die sie von sich selbst machen, und an die Datenbank übermitteln, solche Bilder aus allen erfassten visuellen Bildern heraussuchen lassen, in denen sie abgebildet sind.

Eine Authentifizierungsaufnahme kann bei allen vorgenannten Ausführungen, bei denen der Nutzer diese selbst anfertigt nicht nur gegeben sein durch ein Photo oder Video, das den Nutzer zeigt, sondern auch durch ein Photo oder Video, das einen speziellen Bildinhalt zeigt, der z.B. vom Betreiber der Kamera zur Verfügung gestellt wird, z.B. einen Code, QR-Code oder sonstiges Bild.

Beispielsweise kann in der Nähe einer öffentlichen Kamera ein Authentifizierungsbild angeordnet sein, dass der Nutzer mit seiner Kamera abfotografiert und hierdurch eine Authentifizierungsaufnahme erstellt. Ein Nutzer kann so in gleicher Weise Zugang zu den visuellen Aufnahmen in der Datenbank erhalten, also durch Upload der Authentifizierungsaufnahme. GGfs. kann in der Authentifizierungsaufnahme eine Netzwerkadresse verschlüsselt sein, über welcher die Datenbank zugreifbar ist.

Bei solchen vom Betreiber der öffentlichen Kamera vorgegebenen Authentifizierungsbildern, bzw. daraus erstellten Aufnahmen kann es auch vorgesehen sein, dass solche abzufotografierenden Authentifizierungsbilder sich zeitlich ändern. Durch Nutzung sich ändernder Authentifizierungsbilder, die abzufotografieren sind, wird die zur Verfügung zu stellende Menge an visuellen Aufnahmen der Datenbank reduziert, da nur solche Aufnahmen herausgesucht werden, die während der Gültigkeitsdauer eines Authentifizierungsbildes entstanden sind.

Die Erfindung kann auch vorsehen, dass die Authentifizierungsaufnahme, die ein Nutzer selbst mit einer anderen Kamera als die öffentliche Kamera, insbesondere von sich, z.B. seinem Gesicht macht, mittels eines Kommunikationsgerätes, bevorzugt eines mobilen Kommunikationsgerätes an die öffentliche Kamera gesendet wird.

Hierfür ist es wiederum vorgesehen dass zwischen dem bevorzugt mobilen Kommunikationsgerät des Nutzers und der öffentlichen Kamera eine Kommunikationsverbindung, insbesondere im Nahfeldbereich erstellt wird, um die Übertragung an die öffentliche Kamera zu ermöglichen.

Es kann sodann auch vorgesehen sein, dass die von der öffentlichen Kamera erstellten visuellen Aufnahmen, insbesondere in denen der Nutzer abgebildet ist, vor einer Übermittlung an die Datenbank dieser vom Nutzer selbst zur Verfügung gestellten Authentifizierungsaufnahme zugeordnet werden oder mit der Authentifizierungsaufnahme bzw. in Abhängigkeit der Authentifizierungsaufnahme verschlüsselt werden.

So kann ein Nutzer zu einem späteren Zeitpunkt mit derselben Authentifizierungsaufnahme, die er an die öffentliche Kamera zu diesem Zweck übersandt hat, Zugriff erhalten auf die an die Datenbank übermittelten visuellen Aufnahmen, da anhand der Zuordnung oder der Verschlüsselung aus der Datenbank über die zur Verfügung gestellte Authentifizierungsaufnahme die entsprechenden Aufnahmen heraus gesucht werden können, die dem Nutzer zugeordnet sind, insbesondere die den Nutzer zeigen.

Hier ist besonders darauf hinzuweisen, dass die vom Nutzer an die Kamera zum Zweck der Zuordnung übersendete Authentifizierungsaufnahme grundsätzlich jeglichen Bildinhalt enthalten kann, also nicht zwingend den Nutzer zeigen muss.

Weist die Authentifizierungsaufnahme ein Objekt auf, das auch in der wenigstens einen visuellen Aufnahme der öffentlichen Kamera abgebildet ist, z.B. das Gesicht des Nutzers, so kann in gleicher Weise ähnlich der vorher beschriebenen Ausführungsform die Authentifizierungsaufnahme an die Datenbank gesendet werden ohne das eine vorherige Zuordnung oder Verschlüsselung stattgefunden hat und lediglich durch einen Bildvergleich zwischen der Authentifizierungsaufnahme und der gespeicherten visuellen Aufnahmen diejenige wenigstens eine visuelle Aufnahme aus der Datenbank ermittelt werden, die dem Nutzer zuzuordnen ist, insbesondere in welcher der Nutzer abgebildet ist, der auch in der Authentifizierungsaufnahme abgebildet ist.

Bei allen diesen vorgenannten Ausführungen kann wiederum eine Vorauswahl der zu vergleichenden visuellen Aufnahmen in der Datenbank erfolgen, z.B. anhand einer Zeitangabe die der Nutzer zur Verfügung stellt, so wie es zuvor beschrieben wurde.

Bei allen vorgenannten Ausführungsformen kann es die Erfindung auch vorsehen, dass mittels der öffentlichen Kamera visuelle Aufnahmen mit einem Erfassungswinkelbereich erstellt werden, insbesondere 360°-Rundum-Panoramaaufnahmen erstellt werden, so dass aus diesem Erfassungswinkelbereich nach der Bilderstellung ein Teilwinkelbereich selektiert wird, insbesondere ein solcher Teilwinkelbereich, in welchem der Nutzer abgebildet ist.

So besteht bei dieser Ausführungsform beispielsweise die Möglichkeit, dass mehrere verschiedene Nutzer auf ein und dieselbe wenigstens eine visuelle Aufnahme Zugriff erhalten und dass aus dem gesamten Erfassungswinkelbereich derjenige Teilwinkelbereich selektiert wird, in dem der Nutzer in der Aufnahme abgebildet ist.

Hier kann es die Erfindung vorsehen, dass der Nutzer den ihn interessierenden Teilwinkelbereich auswählen kann oder aber auch dass der Teilwinkelbereich automatisch durch die Datenbank oder eine diese verwaltende Datenverarbeitungsanlage festgelegt wird.

Eine solche Festlegung kann beispielsweise wiederum in Abhängigkeit einer Authentifizierungsaufnahme erfolgen. Dies ist insoweit möglich, als das durch einen Bildvergleich, insbesondere anhand des Gesichtes die Datenverarbeitungsanlage zunächst feststellt, ob der Nutzer in einer visuellen Aufnahme die in der Datenbank gespeichert ist, abgebildet ist, sofern dies der Fall ist, den Winkel bestimmt, unter welchem der Nutzer in dem gesamten Erfassungswinkelbereich der Aufnahme vorkommt und um diesen Winkel des Vorkommens herum einen Winkelbereich wählt, der sodann die zur Verfügung zu stellenden visuelle Aufnahme definiert.

Die Erfindung kann in einer weiteren Ausführungsform auch vorsehen, dass die öffentliche Kamera als plenoptische Kamera (Lichtfeldkamera) ausgebildet ist und visuelle Aufnahmen erstellt, in welchen die Fokusebene nach Erstellung der Aufnahmen angepasst wird.

Auch hier kann eine solche Anpassung bzw. Festlegung der Fokusebene in einer visuellen Aufnahme beispielsweise durch den Nutzer oder in Abhängigkeit einer Authentifizierungsaufnahme automatisch erfolgen. Demnach kann hier durch eine Datenverarbeitungsanlage, welche die Datenbank verwaltet, automatisch wiederum anhand der Authentifizierungsaufnahme (insbesondere das darin gezeigte Nutzergesicht) die Position des Nutzers in einer visuellen Aufnahme bestimmen und die Fokusebene derart festlegen, dass in der an den Nutzer zur Verfügung zu stellenden visuellen Aufnahme aus der plenoptischen Aufnahme genau der Nutzer bzw. eine Umgebung um den Nutzer herum scharf abgebildet ist.

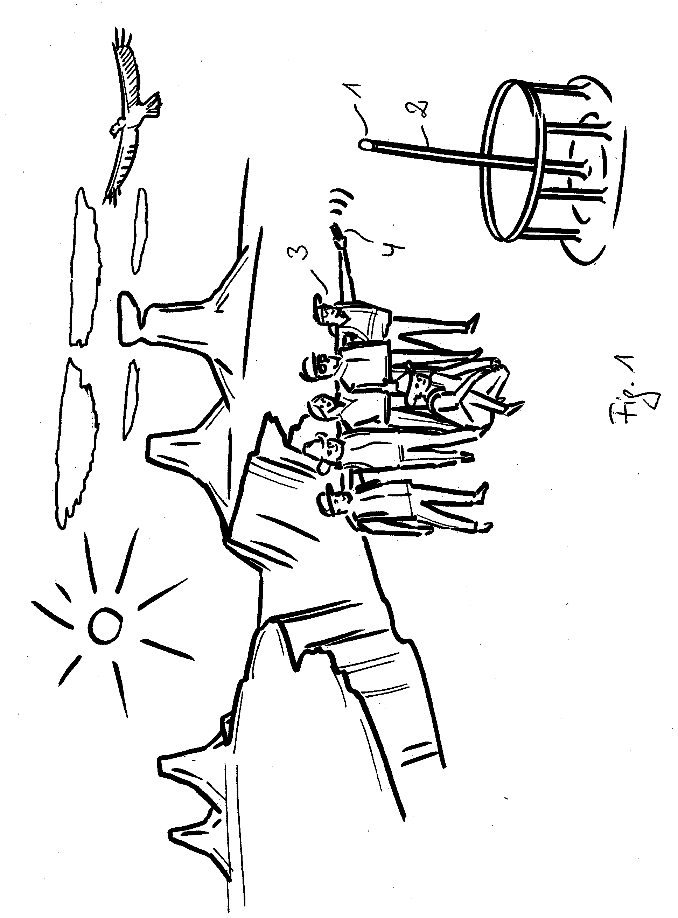

Eine Ausführungsform der Erfindung wird anhand der nachfolgenden Figuren erläutert. Die Figur 1 zeigt eine Situation, in welcher in der Umgebung einer Sehenswürdigkeit eine öffentliche Kamera 1 angeordnet ist, wobei es hier vorgesehen ist, dass die öffentliche Kamera 1 auf einer Halterung 2 zum Beispiel an deren oberen Ende positioniert ist.

Die Halterung 2 kann beispielsweise durch ein Rohr ausgebildet sein, an dessen oberen Ende die Kamera beispielsweise unter einer Glasglocke positioniert ist. Hierbei kann es vorgesehen sein, dass die Kamera hinsichtlich ihrer Ausrichtung, ihrer Brennweite und Fokuseinstellung variabel eingestellt werden kann. Solche Einstellungen können beispielsweise durch einen Benutzer 3 vorgenommen werden.

Zu diesem Zweck nimmt der Nutzer 3 über sein Mobiltelefon 4 eine Kommunikationsverbindung zur Kamera 1 auf, z.B. durch eine Nahfeldkommunikation per W-Lan oder Bluetooth oder auch über Mobilfunk (z.B. GSM), wenn eine Nahfeldkommunikation nicht zur Verfügung steht.

Nach Auswahl der gewünschten Einstellungen kann der Nutzer 3 wiederum durch sein mobiles Kommunikationsgerät 4 auch eine Triggerung der Kamera 1 vornehmen in dem Sinne, dass die Kamera 1 nach der Triggerung wenigstens eine visuelle Aufnahme von dem Nutzer bzw. hier einer Gruppe von Personen aufnimmt.

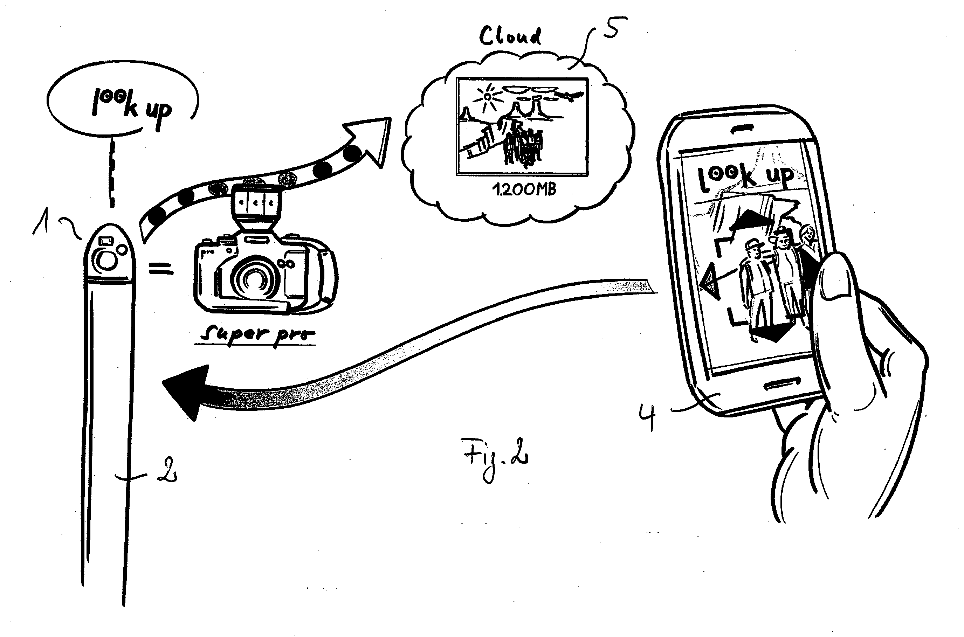

Figur 2 visualisiert, dass die Kamera auf der Halterung 2 an das Telekommunikationsgerät 4 des Nutzers beispielsweise ein Livebild oder Live-Video kommuniziert, so dass der Nutzer sich bzw. die Gruppe von Personen ausrichten kann.

Durch Betätigung des Kommunikationsgerätes kann hier die Auslösung der Kamera erfolgen, wobei beispielsweise das Livebild eingefroren wird und eine Authentifizierungsaufnahme im Sinne der Erfindung bildet oder nach Erstellen der visuellen Aufnahme durch die Kamera 1 die eine oder eine aus mehreren visuellen Aufnahmen ausgewählt wird, um eine Authentifizierungsaufnahme zu bilden und diese an das Kommunikationsgerät 4 übermittelt wird.

Der Nutzer kann diese Aufnahme bewahren für den späteren Zugriff auf diejenigen visuellen Aufnahmen, die von der Kamera 1 durch eine Telekommunikationsverbindung in einer Datenbank 5, z.B. einer so genannten cloudbasierten Datenbank übertragen wurden.

Hier ist es insbesondere vorgesehen, dass die an die Datenbank 5 übertragenen Bilder eine deutlich bessere Bildqualität und somit eine datentechnisch höhere Bildgröße aufweisen, als die Authentifizierungsaufnahme die lediglich zum Zweck der Authentifizierung, insbesondere nicht zum Zweck der Bildung eines Erinnerungsbildes an das Kommunikationsgerät 4 übermittelt wurde.

Beispielsweise nach dem Urlaub kann ein Nutzer die auf seinem mobilen Kommunikationsgerät 4 gespeicherte Authentifizierungsaufnahme oder dieselbe nach Übertragung an ein anderes Kommunikationsgerät benutzen, um Zugriff auf die in der Datenbank 5 gespeicherten Aufnahmen zu erhalten.

Die Erfindung kann allgemein in allen Ausführungen zwecks Begrenzung der zu speichernden Aufnahmen in der Datenbank vorsehen, dass die Aufnahmen nur für einen vorbestimmten Zeitraum, z.B. einen Monat, dort gespeichert und anschließend gelöscht werden.

## Patentansprüche

1. Verfahren zum Zugriff eines Nutzers (3) auf die visuellen Aufnahmen einer öffentlichen Kamera (1), welche am Ort ihrer öffentlichen Benutzung wenigstens eine visuelle Aufnahme als Foto oder Video erstellt, wobei die öffentliche Kamera (1) mittels einer Kommunikationseinheit die wenigstens eine visuelle Aufnahme an eine öffentlich zugängliche Datenbank (5) übersendet und die wenigstens eine visuelle Aufnahme in der Datenbank (5) gespeichert wird zum Abruf durch den Nutzer (3) mittels eines Authentifizierungscodes, mit dem sich der Nutzer als berechtigt ausweist, wofür der Authentifizierungscode durch Telekommunikation an die Datenbank übertragen wird, **dadurch gekennzeichnet, dass** der Authentifizierungscode gebildet wird durch eine visuelle Authentifizierungsaufnahme oder in Abhängigkeit von einer visuellen Authentifizierungsaufnahme, wobei die Authentifizierungsaufnahme ein Foto oder Video ist, wobei die visuelle Authentifizierungsaufnahme vom Nutzer (3) selbst mittels einer anderen als der öffentlichen Kamera erstellt wird und die Authentifizierungsaufnahme mittels eines Kommunikationsgerätes an die öffentliche Kamera (1) gesendet und vor Übermittlung an die Datenbank (5) die wenigstens eine visuelle Aufnahme und die Authentifizierungsaufnahme einander zugeordnet werden oder die visuelle Aufnahme mittels der Authentifizierungsaufnahme verschlüsselt wird, wobei zu einem späteren Zeitpunkt der Nutzer mit derselben Authentifizierungsaufnahme, die er an die öffentliche Kamera zu diesem Zweck übersandt hat, Zugriff erhält auf die an die Datenbank übermittelten visuellen Aufnahmen, wofür dieselbe Authentifizierungsaufnahme mittels eines Kommunikationsgerätes an die Datenbank übermittelt wird und anhand der Zuordnung oder Verschlüsselung aus der Datenbank über die zur Verfügung gestellte Authentifizierungsaufnahme die visuellen Aufnahmen herausgesucht werden, die dem Nutzer zugeordnet sind.

2. Verfahren nach einem der vorherigen Ansprüche, **dadurch gekennzeichnet, dass** die öffentliche Kamera (1) an den Nutzer (3) durch Telekommunikation einer Nachricht an dessen Kommunikationsgerät, insbesondere durch drahtlose Telekommunikation einen Zeitschlitz mitteilt, in welchem die wenigstens eine visuelle Aufnahme durch die Kamera (1) erfolgt oder zumindest auslösbar ist.

3. Verfahren nach einem der vorherigen Ansprüche, **dadurch gekennzeichnet, dass** die öffentliche Kamera (1) in zeitlichen Abständen visuelle Aufnahmen von der Umgebung der Kamera (1) erstellt, wobei zumindest in einigen aller visuellen Aufnahmen der Nutzer abgebildet ist.

4. Verfahren nach einem der vorherigen Ansprüche, **dadurch gekennzeichnet, dass** die Authentifizierungsaufnahme an die Datenbank (5) gesendet wird und durch Bildvergleich zwischen der Authentifizierungsaufnahme und der gespeicherten visuellen Aufnahmen diejenige wenigstens eine visuelle Aufnahme ermittelt wird, die dem Nutzer (3) zugeordnet ist.

5. Verfahren nach einem der vorherigen Ansprüche, **dadurch gekennzeichnet, dass** mittels der öffentlichen Kamera (1) visuelle Aufnahmen mit einem Erfassungswinkelbereich erstellt werden, aus dem nach der Bilderstellung ein Teilwinkelbereich selektiert wird,.

6. Verfahren nach Anspruch 5, **dadurch gekennzeichnet, dass** ein Teilwinkelbereich durch den Nutzer (3) ausgewählt wird oder der Teilwinkelbereich automatisch durch die Datenbank oder eine diese verwaltende Datenverarbeitungsanlage festgelegt wird in Abhängigkeit desjenigen Winkels, unter welchem der Nutzer (3) im gesamten Erfassungswinkelbereich abgebildet ist, wobei der Winkel durch Bildvergleich bestimmt wird.

7. Verfahren nach einem der vorherigen Ansprüche, **dadurch gekennzeichnet, dass** die öffentliche Kamera (1) als plenoptische Kamera ausgebildet ist und visuelle Aufnahmen erstellt, in welchen die Fokusebene nach Erstellung der Aufnahmen angepasst wird, insbesondere durch den Nutzer (3) oder in Abhängigkeit einer Authentifizierungsaufnahme.

## Claims

1. Method for allowing a user (3) access to the visual recordings of a public camera (1) which creates at least one visual recording as a photo or a video at the location at which it is publicly used, wherein the public camera (1) transmits the at least one visual recording to a publicly accessible database (5) by means of a communication unit and the at least one visual recording is stored in the database (5) for retrieval by the user (3) by means of an authentication code which is used by the user to identify himself as authorized, for which purpose the authentication code is transmitted to the database by means of telecommunication, **characterized in that** the authentication code is formed by a visual authentication recording or on the basis of a visual authentication recording, wherein the authentication recording is a photo or a video, wherein the visual authentication recording is created by the user (3) himself by means of a camera other than the public camera, and the authentication recording is transmitted to the public camera (1) by means of a communication device, and, before transmission to the database (5), the at least one visual recording and the authentication recording are assigned to one another or the visual recording is encrypted by means of the authentication recording, wherein, at a later time, the user uses the same authentication recording which was transmitted by him to the public camera for this purpose to gain access to the visual recordings transmitted to the database, for which purpose the same authentication recording is transmitted to the database by means of a communication device and the visual recordings assigned to the user are selected from the database via the authentication recording provided on the basis of the assignment or encryption.

2. Method according to one of the preceding claims, **characterized in that** the public camera (1) communicates a time slot to the user (3) by means of telecommunication of a message to his communication device, in particular by means of wireless telecommunication, in which time slot the at least one visual recording is made by the camera (1) or can at least be initiated.

3. Method according to one of the preceding claims, **characterized in that** the public camera (1) creates visual recordings of the environment of the camera (1) at intervals of time, wherein the user is depicted at least in some of all visual recordings.

4. Method according to one of the preceding claims, **characterized in that** the authentication recording is transmitted to the database (5), and that at least one visual recording which is assigned to the user (3) is determined by means of image comparison of the authentication recording and the stored visual recordings.

5. Method according to one of the preceding claims, **characterized in that** the public camera (1) is used to create visual recordings with an angular capture range, from which a partial angular range is selected after image creation.

6. Method according to Claim 5, **characterized in that** a partial angular range is selected by the user (3) or the partial angular range is automatically determined by the database or a data processing system which manages the latter on the basis of that angle at which the user (3) is depicted in the overall angular capture range, wherein the angle is determined by means of image comparison.

7. Method according to one of the preceding claims, **characterized in that** the public camera (1) is in the form of a plenoptic camera and creates visual recordings in which the focal plane is adapted after creating the recordings, in particular by the user (3) or on the basis of an authentication recording.

## Revendications

1. Procédé d'accès d'un utilisateur (3) aux enregistrements visuels d'une caméra publique (1) qui crée, à l'endroit de son utilisation publique, un enregistrement visuel sous forme de photographie ou de vidéo, dans lequel la caméra publique (1) transmet l'au moins un enregistrement visuel à une base de données (5) accessible publiquement au moyen d'une unité de communication et l'au moins un enregistrement visuel est stocké dans la base de données (5) afin d'être consulté par l'utilisateur (3) au moyen d'un code d'authentification par lequel l'utilisateur se présente comme étant autorisé, le code d'authentification étant à cet effet transmis à la base de données par transmission, **caractérisé en ce que** le code d'authentification est formé par un enregistrement d'authentification visuel ou en fonction d'un enregistrement d'authentification visuel, dans lequel l'enregistrement d'authentification est une photographie ou une vidéo, dans lequel l'enregistrement d'authentification visuel est créé par l'utilisateur (3) lui-même au moyen d'une caméra autre que la caméra publique et l'enregistrement d'authentification est envoyé à la caméra publique (1) au moyen d'un appareil de communication et l'au moins un enregistrement visuel et l'enregistrement d'authentification sont associés l'un à l'autre avant transmission à la base de données (5) ou bien l'enregistrement visuel est crypté au moyen de l'enregistrement d'authentification, dans lequel, à un instant ultérieur, l'utilisateur obtient un accès aux enregistrements visuels transmis à la base de données à l'aide du même enregistrement d'authentification que celui ayant été envoyé à cet effet à la caméra publique, le même enregistrement d'authentification étant à cet effet transmis à la base de données au moyen d'un appareil de communication et les enregistrements visuels qui sont associés à l'utilisateur sont recherchés dans la base de données sur la base de l'association ou du cryptage par l'intermédiaire de l'enregistrement d'authentification mis à disposition.

2. Procédé selon l'une des revendications précédentes, **caractérisé en ce que** la caméra publique (1) communique à l'utilisateur (3), par transmission d'un message à destination de son appareil de communication, notamment par transmission sans fil, une tranche de temps dans laquelle l'au moins un enregistrement visuel est effectué ou peut au moins être déclenché par la caméra (1) .

3. Procédé selon l'une des revendications précédentes, **caractérisé en ce que** la caméra publique (1) crée des enregistrements visuels de l'environnement de la caméra (1) à certains intervalles de temps, dans lequel une image de l'utilisateur est formée dans au moins certains de la totalité des enregistrements visuels.

4. Procédé selon l'une des revendications précédentes, **caractérisé en ce que** les enregistrements d'authentification sont envoyés à la base de données (5) et **en ce que** l'au moins un enregistrement visuel qui est associé à l'utilisateur (3) est déterminé par comparaison d'images entre les enregistrements d'authentification et les enregistrements visuels stockés.

5. Procédé selon l'une des revendications précédentes, **caractérisé en ce que** des enregistrements visuels sont créés au moyen de la caméra publique (1) avec une plage angulaire de détection au sein de laquelle une plage angulaire partielle est sélectionnée après la création des images.

6. Procédé selon la revendication 5, **caractérisé en ce qu'**une plage angulaire partielle est sélectionnée par l'utilisateur (3) ou **en ce que** la plage angulaire partielle est automatiquement établie par l'intermédiaire de la base de données ou d'un système de traitement de données gérant cette dernière, en fonction de l'angle sous lequel l'image de l'utilisateur (3) est formée dans la totalité de la plage angulaire de détection, dans lequel ledit angle est déterminé par comparaison d'images.

7. Procédé selon l'une des revendications précédentes, **caractérisé en ce que** la caméra publique (1) est réalisée sous la forme d'une caméra plénoptique et **en ce qu'**elle crée des enregistrements visuels dans lesquels le plan de focalisation est adapté après création des enregistrements, notamment par l'utilisateur (3) ou en fonction d'un enregistrement d'authentification.
